# EUROPEAN PATENT APPLICATION

(11) **EP 2 072 593 A1**
(43) Date of publication of application: **24.06.2009**
(21) Application number: 07076099.6
(22) Date of filing: 18.12.2007
(51) Int. Cl.: C09J 5/06

(54) **A method for joining moist parts**

(71) Applicant: Nederlandse Organisatie voor Toegepast- Natuurwetenschappelijk Onderzoek TNO, 2628 VK Delft (NL)
(72) Inventor: Homan, Waldemar Jozef, 3911PC Rhenen (NL)
(74) Representative: Hatzmann, Martin

(57) **Abstract**

A method for joining moist parts (1,2), for example moist wood parts, wherein spaced-apart bonding surfaces of the parts are connected using a glue (3). Also, the invention provides a method for joining moist hardwood parts, wherein bonding surfaces of the hardwood parts are connected using a glue (3). Besides, there is provided a composite element, manufactured by such a method.

## Description

The invention relates to a method for joining moist parts, for example moist wood parts

Various methods are known to join (i.e. interconnect) parts, for example gluing the parts together. Gluing together of various parts can advantageously lead to a desired construction or assembly (for example a composite part), having desired dimensions and/or strength. In case of wood parts, particularly, gluing parts together to provide larger composite wood parts is desired in view of rising costs of wood, and future reduction of global availability of large timber parts.

Usually, bonding surfaces of the parts have to be clean and dry (i.e. moistfree) before glue based joining process can be carried out. Such known processes can only be carried out in dry conditions. In fact, until the present day it is generally believed that gluing together moist parts is not possible at all, or can only lead to weakly bonded parts that are not useable as durable construction components due to bad, unstable glue bonds.

Particularly, a disadvantage of known gluing processes is that the parts usually have to be treated, for example dried, before they can be joined using glue. The drying of the parts can take considerable amounts of time and energy, and can be expensive. For example, in the case the parts are made of hygroscopic hardwood, elaborate drying processes may be necessary to have the wood release most of its water. The drying processes may involve thermal treatment of the wood to accelerate the drying, however, this can lead to structural degradation (for example the formation of cracks) of the wood. Therefore, the hardwood is usually treated by slow drying processes to achieve a desired low moist content (far below the respective wood fibre saturation point), the slow processes having durations of many months or even years.

Besides, in known gluing processes, the parts can only be glued in a dry environment, which may not always be a desired location in view of efficiency and costs. For example, in case of gluing timber parts for construction purposes (for example, outdoors, in building construction, in civil engineering, road construction, shipping construction, marine or offshore construction), local environment conditions of a construction site can be very wet. Thus, the timber parts have to be glued in a location other than the construction site, leading for example to additional transportation costs, overhead costs, manpower. Alternatively, dry environment conditions have to be awaited, or at least part of the construction site has to be made substantially moist free, before the timber can be glued locally.

However, in some applications, the joined (i.e. glued) parts are to be withstand wet conditions, for example in the case the parts are to can be contact with a wet environment (as in case of outdoors applications, in certain building parts, road parts, ship parts, offshore construction parts, dams, canal lining, lock gates, or other water barriers). In that case, application of substantially dry glued wood can lead to structural degradation afterwards, and particularly to degradation of the glue joint, due to moist related expansion of the initially dry parts when they are in the wet operating conditions.

It is desired to provide a durable, strong joint between moist parts. Particularly, it is desired to provide a method, wherein the resulting joined parts can be used reliably under wet conditions.

To this aim, the invention provides a method for joining moist parts, for example moist wood parts, wherein spaced-apart bonding surfaces of the parts are connected using a glue.

It has been found that, surprisingly, durable, strong glue bonds between the parts can be achieved, in the case the parts are spaced-apart. Moreover, it has been found that the bonded (glued) parts, for example forming a composite construction element, can be used reliably under wet conditions. Without wishing to be bound to any theory, it is believed that the spaced-apart bonding surfaces provide for application of a relatively thick glue layer there-between, which glue layer provides a durable connection between the parts, and can also provide structural advantages to the glued assembly (of the parts and glue). For example, in case at least one of the parts is wood, the relatively thick glue layer can divert or absorb humidity related dimensional changes (expansion and shrinking) of the part, so that failing of the joint is prevented.

The European patent application EP 0 493 010 A1 discloses a method of joining wood parts, however, this known method does not teach to hold the parts spaced-apart from each other. This known method does not lead to durable bonding between, for example, two hardwood parts.

In the present method, the parts can be joined in various ways. For example, the method can include laminating or finger jointing the parts together.

Preferably, the bonding surfaces are solid, uninterrupted glue receiving surfaces of the parts, which surfaces are faced towards each other (and extend for example in parallel), wherein the glue substantially contacts both bonding surfaces. In this way, the glue can connect the parts directly to each other, preferably over relatively large bonding surface areas. Also, according to an embodiment, the glue does not penetrate the moist parts, or is not absorbed into the moist parts.

The moist parts can be spaced-apart in various ways. For example, according to an embodiment, a glue layer can be applied between the moist parts, wherein the glue layer as such holds (positions) the bonding surfaces of the parts at the desired distance from each other. Also, for example, the method can include the application of positioning means (for example automated positioning system) that are configured to hold or support the moist parts, and to position the parts with respect to each other, such that the bonding surfaces of the parts are separated from each other by a desired distance during the curing of the glue.

According to a further embodiment, the method includes: positioning one or more spacers between the bonding surfaces of the parts to define or uphold a glue receiving space between the surfaces. This is particularly advantageous to precisely position relatively large bonding areas of the parts at a desired distance from each other.

For example, according to an embodiment, a plurality of spacers can be mixed with the glue before the glue is applied to the parts. Alternatively, for example, one or more of the bonding surfaces can be provided with one or more spacers, before application of the glue. Each spacer can be configured in different ways, can have various dimensions, and can be made of different materials, as will be appreciated by the skilled person.

For example, a spacer can be made of the same material as one or each of the moist parts that are to be bonded together, or a different material. According to a further embodiment, each spacer as such can be moist. Preferably, each spacer is made of rigid material. A spacer can be configured to absorb part of the glue. Alternatively, a spacer does not absorb the glue. A spacer as such may have one or more lateral spacer bonding surfaces that interact with the glue, however, that is not necessary.

According to a further embodiment, the one or more spacers are configured to hold the opposite bonding surfaces in parallel, and at a constant distance from each other during curing of the glue. In this way, a uniform glue layer can be upheld between the two parts, providing high and uniform bonding strength.

Good results have been achieved in case the method comprises: providing a glue layer having a thickness larger than 0.1 mm. Besides, according to a further embodiment, the glue layer thickness is constant (viewed along the bonding surfaces).

Preferably the glue layer thickness ('glue line thickness') is at least 0.2 mm or larger. For example, according to a further embodiment, the glue layer thickness between the bonding surfaces can be in the range of 0.2-2 mm, more particularly in the range of 0.3-0.7 mm, for example in the range of 0.4-0.6 mm.

For example, according to an embodiment, the one or more spacers can be made of rigid material and can have a thickness that equals a desired glue layer thickness, particularly to position the parts in a manner to obtain a desired glue layer there-between.

Also, according to an embodiment, the moist parts can be pressed together, particularly in directions normal with respect to an intermediate glue layer, during a curing of the glue, preferably using a pressure larger than about 0.5 N/mm². Furthermore, in case of application of one or more spacers, the spacers are preferably configured to prevent that the pressing together of the parts leads to tension in the glue.

The parts can be kept moist during a glue curing process. For example, the parts can be kept in water during curing of the glue.

According to a further embodiment, the moist parts are thermally treated to cure the glue. Advantageously, the thermal treatment involves submerging the parts in a hot fluid, preferably a fluid that does not lead to a drying of the parts during the curing of the glue. Also, for example, the parts can be cooled after the thermal treatment, using cold water.

Various types of glue can be applied. As follows from the above, particularly, the glue is a curable glue. Good results have been obtained with glue that is or contains a curable epoxy resin, and alternatively with glue that is or contains a curable polyurethane adhesive. Also, for example, the glue can be of a phenol formaldehyde type, or a resorcinol formaldehyde, or a phenolresorcinol formaldehyde type.

The moist part, to be joined, can be moist (that is: moist with water, for example: contain water, hold water, be wet with water, having water sorbed thereto, as will be appreciated by the skilled person) by themselves. Also, the method can comprising: wetting the parts with water before application of the glue (to the parts), for example in case the parts are initially dry or in case the humidity or wetness parts of the parts is initially below a desired process humidity/wetness.

The moist parts, to be joined, can be made of various materials.

According to a preferred embodiment, the moist parts are made of the same material. Alternatively, one of the parts is made of a first material (for example wood), and the other part is made of a material that is different from the first material (for example concrete or ceramics).

For example both parts can be rigid parts, suitable to be used as construction elements and/or to be used as composite construction element after being joined. For example, at least one of the moist parts can be made of hygroscopic material. Also, for example, at least one of the moist parts can be made of: concrete, stone, brick, or ceramics.

According to an embodiment, at least one of the moist parts can be made of freshly cut wood (for example unseasoned timber).

In a further embodiment, at least one of the moist parts (for example each part) is a wood part, wherein the wood fibres of the wood part are substantially (for example at least 90%) saturated with water, before the parts are connected to each other using the glue.

Also, in a further embodiment, at least one of the moist parts (for example each part) is made of wood, particularly hardwood, for example at least one of: oak, beech, elm, maple, tropical hardwood, meranti, wenge, walnut, teak, mahogany, azobe, maçaranduba, and ebony. For example, the wood part can have a dry wood density of at least 800 kg/m³.

An aspect of the invention particularly relates to joining wet hardwood. According to the present aspect, advantageously, in a method for joining moist hardwood parts, bonding surfaces of the hardwood parts are connected using a glue. In that case, preferably, a glue line having a thickness of more than 0.1 mm is applied between the hardwood bonding surfaces, and preferably a glue line having a thickness in the range of 0.2-2 mm.

Also, the present invention provides a composite element, manufactured by a method according to the invention. The composite element is durable and strong, can be made in an efficient process, in a relatively short time frame and using relatively little energy and expenses compared to traditional manufacturing methods, and for example in a desired construction site, and can withstand changing humidity conditions relatively well.

Further advantageous embodiments of the invention are described in the dependent claims. These and other aspects of the invention will be apparent from and elucidated with reference to non-limiting embodiments described hereafter, shown in the drawings.
Figure 1 shows a side view of an embodiment of a composite element;
Fig. 2 shows a cross-section over line II-II of Fig. 1;
Fig. 3 shows a first step of an embodiment of a method for joining moist parts;
Fig. 4 shows a second step of an embodiment of the method;
Fig. 5 shows a third step of an embodiment of the method;
Fig. 6 shows a fourth step of an embodiment of the method;
Fig. 7 shows a fifth step of an embodiment of the method;
Fig. 8 is similar to Fig. 6 and shows an alternative third step;
Fig. 9 is similar to Fig. 7 and depicts an alternative fourth step;
Fig. 10A shows a top view of a first embodiment of a spacer;
Fig. 10B is a cross-section over line XB-XB of Fig. 10A;
Fig. 11A shows a top view of a second embodiment of a spacer;
Fig. 11B is a cross-section over line XIB-XIB of Fig. 11A;
Fig. 12 is a top view of a spacer having apertures;
Fig. 13 is similar to Fig. 1 and shows an embodiment of a finger jointed composite element;
Fig. 14 is a cross-section over line XIV-XIV of Fig. 13; and
Fig. 15 schematically shows an embodiment of a positioning system for carrying out a process for joining moist parts.

Similar or corresponding features are denoted by similar or corresponding reference signs in this application.

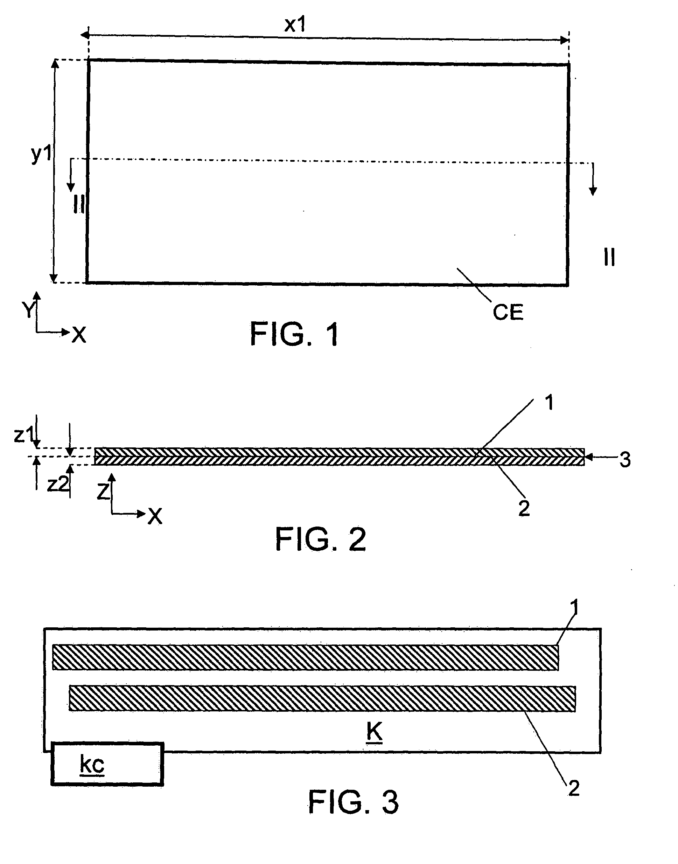

Figures 1-2 schematically depict an embodiment of a composite element CE. The present element is made of a two parts (a first part 1 and a second part 2), laminated together via a glue layer 3. According to a further embodiment (not depicted), a composite element CE can be made of more than two parts, wherein all the parts are joined via glue layers.

In the present embodiment, the parts 1, 2 are plates or sheets 1, 2, which form a composite rectangular plate/sheet CE (having a thickness that is relatively small compared to dimensions x1, y1 measured in other directions X, Y). The composite element CE can have various shapes, for example straight, curved, rectangular (as in Fig. 1), square, convex, concave, elongated, beam- or rodlike, and a combination of these and/or other shapes, as will be appreciated by the skilled person.

A composite structure CE provided by a process according to the invention can be used in an advantageous manner in/as construction element. The composite element CE can comprise or be used to provide, for instance, plate material, a wall, laminate, a sandwich construction, a construction block, a construction beam, a door, a window, a window casings, ceiling parts, board, a floor part, a roof box and/or the like.

Also, each of the parts 1, 2 as such can have various shapes and dimensions, as will be appreciated by the skilled person. Also, the parts 1, 2 can have the same dimensions, or they can have mutually different dimensions.

For example, the composite element CE is relatively large, made of relatively large components 1, 2 (this contrary to, for example, composites that are made of fiber reinforced of wood chips material. As a non-limiting example, each ofparts 1, 2 can have a length x1, measured along a first orthogonal direction X, of at least 1 cm. Also, each of the parts 1, 2 can have a width y1, measured along a second orthogonal direction Y, of at least 1 cm. A thickness z1, z2, measured along a third orthogonal direction Z, of each part can be at least circa 1 mm, or a different thickness. According to a further embodiment, said part length x1 can be at least 0.1 m, for example more than circa 0.5 or 1 m. Said part width y1 can also be, for example, at least 0.1 m, particularly at least 0.5 m. An overall thickness (z1+z2) of the composite element CE can be at least 1 mm, for example more than 1 cm, or more than 0.1m in a further embodiment.

As is mentioned above, the parts 1, 2 can be made of various materials. In the following, each of the parts 1, 2 is made of hygroscopic hardwood, particularly having a dry wood density of at least 800 kg/m³. Alternatively, one or both parts 1, 2 can be concrete, stone, brick, or ceramics parts.

Figures 3-6 show an advantageous embodiment of joining two parts 1, 2 together, for example to manufacture the composite element CE depicted in figures 1-2. The method preferably includes joining the parts 1, 2 when they are moist, wherein spaced-apart bonding surfaces 1a, 2a of the parts 1, 2 are connected using a glue layer 3. According to a non-limiting embodiments, for example, the parts 1, 2 to be joined have substantially flat bonding-surfaces 1a, 2a, for example by preparing the parts 1, 2 in a conventional industrial planing process.

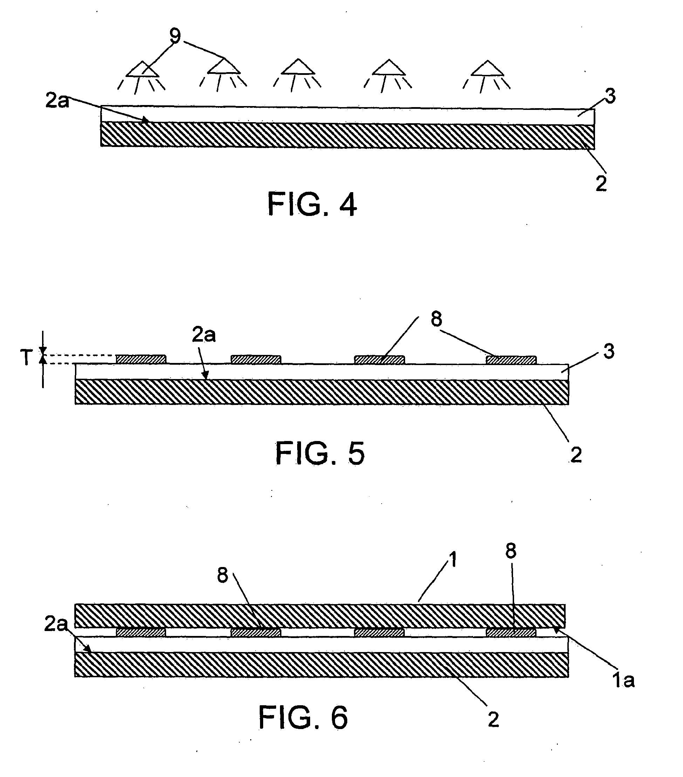

The method can include an application of a glue layer 3 to the parts 1, 2 (see Fig. 4).

Optionally, spacers (i.e. distance holders) 8 are provided between the parts 1, 2, as indicated in Fig. 5-6.

After that, the parts 1, 2 can be positioned such that a glue layer having a constant, uniform layer thickness T is present between the bonding surfaces 1a, 2b, with the bonding surfaces being spaced-apart from each other over the same distance T.

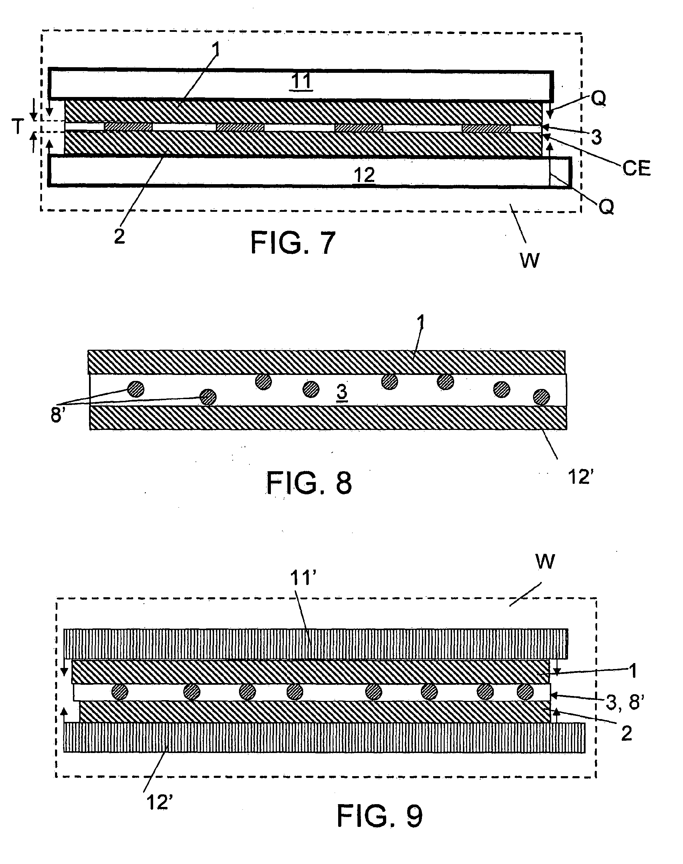

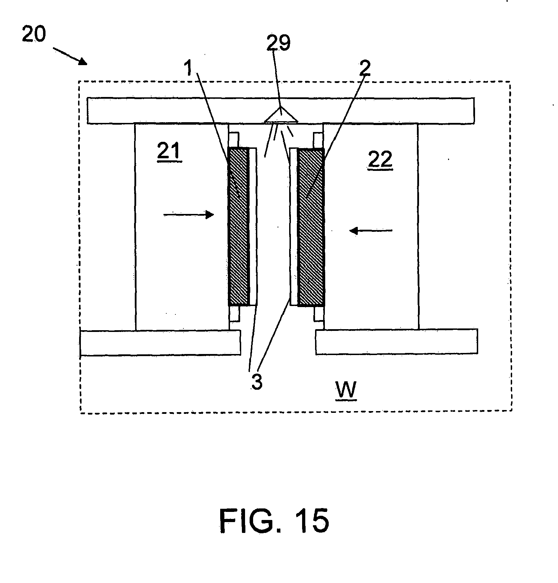

For example, the parts 1, 2 can be pressed together, see Fig. 7, by pressing devices 11, 12, or be held by a positioning system (see Fig. 15).

Also, preferably, the moist parts 1, 2 are thermally treated to cure the glue 3, particularly by submerging the parts 1, 2 in a hot fluid W, preferably a non-drying fluid, for example water or oil. Thus, preferably, during the curing of the glue layer 3, the hardwood parts 1, 2 remain moist (and retain for example their initial high moist content, or further increase their moist content).

More particularly, as has been mentioned, for example, the parts 1, 2 to be joined can be moist as such, for example in case they are unseasoned timer parts 1, 2 (i.e., freshly cut wood, having a high natural moist content), and/or in the case that the parts 1, 2 are joined in moist environmental conditions (for example on a building site, during or shortly after rain).

Also, the method can comprise an actively wetting of the parts 1, 2 with water, before application of the glue. As an example (see Fig. 3), the method can include conditioning each of the parts 1, 2 in a humid (moisturizing) climate chamber K or mist chamber (known as such), such that the hygroscopic parts 1, 2 achieve a desired moist content, for example to become saturated with moist. As a non-limiting example, the relative humidity inside the chamber K can be about or near 100% (for example about 98%), for example at atmospheric pressure. As an example, the chamber can include a chamber humidity control system kc to control the conditioning of the parts 1, 2. In an embodiment, for example, the parts 1, 2 can be laid in a water bath W, or be sprayed with water, to moisten the parts 1, 2.

According to a further embodiment, the wood fibres of the wood part 1, 2 are substantially (for example at least 90%, preferably at least 99%) saturated with water, before the parts 1, 2 are connected to each other using the glue. Preferably, the moist parts 1, 2 have a moisture content near, at or above their respective fiber saturation points. For example, according to a further embodiment, during curing of the glue, wood cell cavities of the parts 1, 2 contain free water. Also, according to an embodiment, preferably, drying of the parts during curing of the glue (see below) is prevented.

Depending on the wood type, the fiber saturation point is usually between 35 and 25%. When wood is in its fiber saturation point, wood cell walls are saturated with water, but in the cell cavities (the lumina), there is virtually no moisture yet. If the wood moisture content is higher than the fiber saturation point, the surplus of moisture is stored in the lumina, as free water. Generally, when wood moisture falls below the fiber saturation point, for example during a drying of the wood, the wood will shrink.

According to an embodiment, the bonding surfaces 1a, 2a of the parts 1, 2 are solid, uninterrupted glue receiving surfaces of the parts, that are faced towards each other during at least part of the process (see figures 6-7), wherein the glue 3 substantially contacts both bonding surfaces 1a, 2a. In a non-limiting example, the glue application process is configured such that the glue 3 wets at least 50% of each of the bonding surfaces 1a, 2a, preferably at least 75% and more preferably at least 90%.

Application of the glue 3 can be achieved in various ways. For example, glue 3 can be applied to only one of the bonding surfaces 2a first, before the parts 1, 2 are joined (as in figures 4-7). For example, figure 4 depicts application of a glue layer 3 on the bonding surface 2a of a second hardwood part 2. Alternatively, each of the bonding surfaces 1a, 2a can be wetted with glue 3 first before joining the parts 1, 2. Glue can be applied manually, or using one or more dedicated glue applicators 9. For example, glue applicators 9 can include one or more glue dispensers, sprayers, rollers, glue jet or glue dripping applicators, or other applicator types. Particularly, the curable glue 3 is in a respective liquid or deformable state during application thereof. According to an embodiment, the glue 3 is applied onto the moist parts 1, 2, such that the glue does not penetrate the parts 1, 2. Good results have been obtained with a curable epoxy resin glue 3, and alternatively with a curable polyurethane adhesive 3. Additionally, the glue 3 as such can contain a hardener to promote the glue curing.

As is mentioned before, preferably, one or more (preferably loose, unbound) spacers 8 are positioned between the bonding surfaces 1a, 2a of the parts 1, 2 to define or uphold a glue receiving space between the surfaces. The spacers 8 can be configured and applied in various ways. The spacers 8 can be configured to hold the opposite bonding surfaces 1a, 2a in parallel, and at a constant distance T from each other during curing of the glue (as in Fig. 7). Particularly, each of the spacers 8 is made of rigid material. Also, in the present embodiments, each of the spacers 8 has a thickness that equals a desired constant glue layer thickness T.

It has been found that good results are achieved when the mentioned glue layer (i.e. "glue line") thickness T is larger than 0.1 mm. For example, the layer thickness can be larger 0.2 mm, for example in the range of 0.2-2 mm. In a further embodiment, the glue layer thickness T in the range of 0.3-0.7 mm, for example in the range of 0.4-0.6 mm. It has been found that such layer thicknesses lead to highly reproducible, strong and durable bonds that can withstand various (particularly wet) moisture conditions.

Figure 5 depicts a step of applying spacers 8 onto a glue layer 3 that is already applied onto the second part 2. Subsequently (see Fig. 6), the first part 1 can be positioned with its bonding surface 1a onto the glue layer 3 and spacers 8, to be pressed towards the second part 2 (as in Fig. 7), such that the spacers 8 are pressed onto the glue 3 to contact both bonding surfaces 1a, 2a, and hold the surfaces 1a, 2a at the desired distance T from each other. Alternatively, for example, a bonding surface 1a, 1b of a moist part 1, 2 can be provided with the one or more spacers first, before application of the glue. Also, for example, a glue layer 3 can be applied onto the bonding surface 1a, 2a of one of the parts 1,2 and the one or more spacers 8 to the bonding surface 2a, 1a of the other part 2, 1, before the bonding surfaces are joined and the glue is cured.

During curing of the glue layer 3, for example, the moist parts 1, 2 can be pressed together (see arrows Q in Fig. 7) by pressing devices 11, 12, particularly in directions normal with respect to the intermediate glue layer 3 ( as in Fig. 7), and for example using a pressure larger than about 0.5 N/mm², for example a pressure in the range of 0.5 to 1.5 N/mm², or a different pressure. The pressing devices 11, 12 can include or be part of various types of pressing plates, a motorized, pneumatic or hydraulic press, a clamping system or other pressure application means, as will be appreciated by the skilled person. The pressure application system 11, 12 is preferably configured to apply uniformly distributed pressure to external surfaces (that are faced away from the bonding surfaces 1a, 2a) of the parts 1, 2. In case of spacer application, the one or more spacers 8 can prevent that the pressing together of the parts 1, 2 leads to tension in the cured glue 3. Thus, a highly reliable and durable bond can be obtained between the parts 1, 2.

Curing of the glue layer 3 between the moist parts 1, 2 can be carried out in various ways. As is mentioned above, preferably, the moist parts 1, 2 are thermally treated to cure the glue 3. For example, to this aim, the parts 1, 2 can be submerged into a hot fluid W, for example a hot liquid, and preferably hot water W (or, alternatively, for example, an oil), for example during the application of pressure to the parts (see Fig. 7). The fluid W is schematically indicated in Figures 7, 9 by a dashed rectangle. For example the fluid W can be sprayed or merged onto the parts 1, 2, or it can be a fluid bath W. According to a further embodiment, the temperature of the fluid (preferably water) W is higher than 30 °C and lower than 100 °C. For example, good results have been obtained when the curing water temperature is in the range of about 40-80 °C, more particularly a range of about 50-70 °C, for example a temperature between about 55-65 °C (such as about 60 °C). Depending on the water temperature and the glue, for example, a curing time period can be more than 1 hour, for example a time period in the range of about 2-24 hours, for example about 4 hours, or a different time period. The hot fluid W can be configured in various ways, as will be appreciated by the skilled person. Hot water W can provide an effective and relatively inexpensive and safe thermal treatment to cure the glue 3. Besides, for example, the pressing devices 11, 12 can be made of solid material, for example material that does not absorb the hot fluid W, nor moist from the parts 1, 2.

After the curing process, for example, the parts 1, 2 can be passively or actively cooled down, for example to room temperature. Preferably, the cooling down of the parts 1, 2 is being achieved using a cooling fluid, for example cooling water, that does not lead to any drying of the parts 1, 2 (so that the bonded parts 1, 2 as such still remain moist, or even increase their moist content during the cooling process). To this aim, for example, the parts 1, 2 can be cooled after the thermal treatment, using cold water, or using a different cooling fluid or liquid. According to a non-limiting embodiment, for example the parts 1, 2 can be cooled down from the curing temperature by submerging the joined parts (at least partly, but preferably fully) in cold water, for example water having a temperature in the range of 0 °C to 35 °C, for example during a cooling period in the range of about 0.5 h to 24 h (for example during 2 hours), or using a different cooling period.

It has been found that the resulting composite hardwood element CE is strong, and can withstand wet and dry outdoors conditions and/or marine conditions for long periods of time. As is mentioned above, it is believed that the relatively thick, preferably initially stress-free, bonding glue layer 3 can divert or absorb relatively large humidity related dimensional changes of the components 1, 2 of the composite element CE.

Figures 8-9 show an alternative, which differs from the embodiment of Figures 6-7, in that the spacers 8' are mixed with the glue 3 before the glue 3 is applied to at least one of the parts 1, 2. After the glue, containing the spacers 8', is dispensed and the parts 1, 2 are positioned with the bonding surfaces facing each other, again, the parts can he moved towards each other, and can be held in a hot fluid W, for example water, to cure the glue 3. For example, in Fig. 9, a pressing or positioning system 11', 12' is applied that can wet the parts 1, 2 with the fluid W as well. As an example, the system can include rigid pressing members 11', 12' that are porous to the fluid W, or that include a plurality of fluid feeding channels, to receive fluid from its environment, and/or to feed fluid W to external sides (contacting the members 11', 12') of the moist parts 1, 2.

A spacer 8 can have various shapes, for example flat, straight, curved, rectangular, square, convex, concave, elongated, beam- or rodlike, spherical, ellipsoid, and a combination of these and/or other shapes, as will be appreciated by the skilled person. A spacer 8 can be hollow, or solid. According to an embodiment, a spacer as such comprises one or more apertures.

As is mentioned above, a spacer 8 can be made of various materials, for example the same material as one or each of the parts that are to be bonded together, or a different material. A spacer 8 as such can be made of wood, hardwood, or plastic, metal, an alloy, a fibre reinforced material, a composite material carbon fibre composite material, or another material. Preferably, all spacers 8, to be applied in joining the parts 1, 2, are made of the same material(s). In a further embodiment, different spacers made of different materials are applied between the bonding surfaces 1a, 2a.

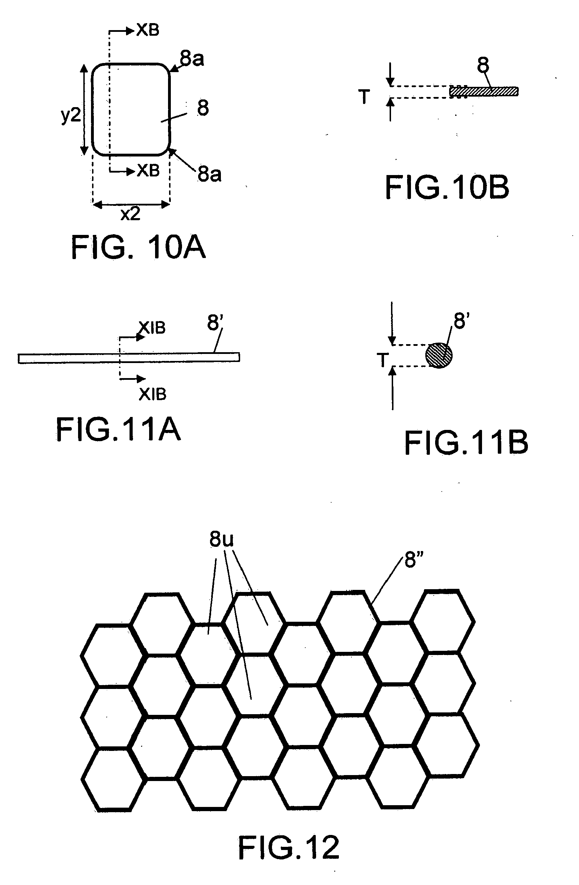

Figures 10-12 show several non-limiting examples of spacers 8, to be used in a method according to the invention. As mentioned above, each spacer 8 can have a predetermined thickness T to provided a desired glue layer thickness, and is preferably made of rigid (i.e., inelastic) material that does not deform during the pressing together of the parts 1, 2. In the embodiment of Fig. 10A, 10B, the spacer 8 is a flat platelet 8, of a small length x2 and a small width y2. For example, these dimensions x2, y2 can be a fraction of the length and width of the parts 1, 2 to be joined. As a non-limiting example, each of the length x2 and width y2 of the spacer 8 can be at most 1/10 the length x1 and width y1, respectively, of the parts 1, 2, and is particularly smaller than 100 times the length x1 and width y2 of the parts 1, 2, respectively. For example, the spacer 8 can have rounded edges 8a. Figures 11A, 11B show an embodiment of an elongated, cylindrical spacer 8', for example having a circular cross-section.

Figure 12 shows yet another spacer embodiment. In this case, the spacer 8" is a relatively thin structure, for example a mat or sheet, comprising a plurality of apertures or cells 8u that can receive to glue 3 to bond the parts 1, 2 together. In this case, for example, lateral spacer dimensions can be similar to the length and width of the parts 1, 2 to be joined, so that a single spacer 8" can be applied between the parts 1, 2.

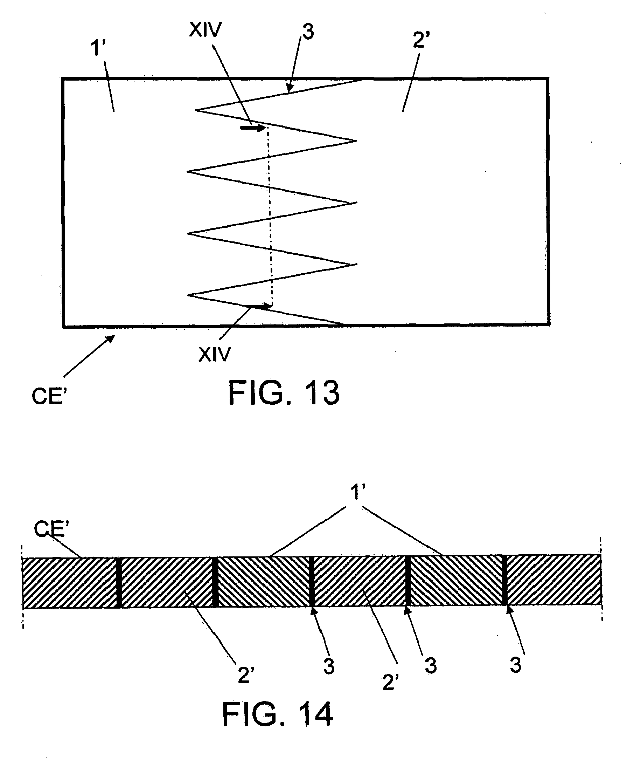

In the above embodiments, the parts 1, 2 are laminated onto each other. Figures 13-14 show an alternative configuration, wherein two parts 1', 2' have been joined by a method according to the invention, by finger jointing the parts 1', 2' together, to manufacture a composite element CE'. Also in this case, spaced-apart bonding surfaces of the parts 1', 2' (particularly of between the finger joint sections thereof) have been using glue 3.

Figure 15 depicts a non-limiting example of a (preferably automated) positioning system 20 that is configured to hold or support the moist parts 1, 2, and to position the parts 1, 2 with respect to each other, such that the bonding surfaces of the moist parts 1, 2 are separated from each other by the desired distance T during the curing of the glue layer. For example, the system 20 can include two supports 21, 22 to hold the parts 1, 2, wherein the system 20 can move the supports 21, 22 towards each other and away from each other. The system 20 can include a glue application device 29 that is configured to apply a relatively thick layer of curable glue to the bonding surfaces 1a, 2a, before the surfaces 1a, 2a are moved to the desired glue line thickness position. The system can be configured to press the parts 1, 2, held by the supports, towards each other during the curing of the glue, in which case the glue preferably contains above-mentioned spacers 8. However, alternatively, the system carries out a method according to the invention without the application of spacers between the parts 1, 2. In the latter case, for example, no particular pressure is being applied between the bonding surfaces 1a, 1b. Preferably, as above, the system 20 is also configured to prevent drying of the moist parts 1, 2 during the curing of the glue layer 3, for example by application of a fluid bath or fluid applicators to moisten the parts 1, 2 with fluid W.

Embodiments of the present invention lead to a reliable bonding of moist parts 1, 2, for example in-situ, under moist conditions. By application of glue, the parts 1, 2 can be bonded directly to each other, without having to rely on conventional mechanical connecting means (such as screw or bolting means).

For example, it has been found that the method provides very good results in case of joining hardwood.

### Experimental results

In an experiment, flat Maçaranduba and Azobé samples of 100x100x20 mm³ have been prepared, from timber that was conditioned in a climate chamber at 97% Relative Humidity during at least 2 months. The obtained wood samples have been glued on the largest transversal side with grain direction of both samples parallel, by a process according to the invention, using spacers to provide a substantially tension free glue line, and were subsequently cured. After curing for 24 hours, the glued composite samples were cut into smaller samples, to obtain sample-parts of 50x50x40 mm³ each. Various curing conditions have been applied, including submerging the samples into hot water. The cured sample-parts were dried at 20 °C and 50% Relative Humidity for 14 days. After this drying period, the glue line of each sample-part was visually inspected for delamination. The sample-parts were also submersed in water at room temperature (20 °C) for 24 hours, prior to mechanical testing. The mechanical testing consisted of a shear test, similar to the shear test described in EN 392.

In an experiment, a glue line thickness T of 0.5 mm, of SP 370 Epoxy resin, has applied between Azobé and Maçaranduba samples 1, 2. The glue was cured without submerging the samples into water, but under ambient conditions at 20 °C and 65% rh (relative humidity) during 24 h .

This resulted in a maximum shear strength (τ) of 9.221 MPa in case of the Azobé sample, and a maximum shear strength (τ) of 5.320 MPa in case of the Maçaranduba sample.

In a further experiment, a glue line thickness T of 0.5 mm has applied between moist Azobé and Maçaranduba samples 1, 2. In this case, curing of the glue was carried out by submerging the samples into hot water for 1 hour, having a temperature of 60°C. Surprisingly, this led to very good and reproducible results, and maximum shear strength (τ) of 8.263 MPa in case of the Azobé sample, and 9.911 MPa in case of the Maçaranduba sample.

Also, experiments have been carried out using glue line thicknesses T significantly smaller than 0.1 mm (near zero thickness), and glue lines of 0.25 and 1.0 mm thick. It has been found that very thin glue lines (i.e., when pressing the wood parts together without using spacers 8) lead to unpredictable results. It has been found that glue lines of 0.25 mm thickness perform better than the near-zero thick glue lines. In the present experiments, the 1.0 thick glue lines have been found to perform in the same order of magnitude as the 0.5 mm thick glue lines, but can show some bubble formation under certain processes. Thus, (unstressed) glue lines 3 having a thickness of about 0.5 mm have found to provide very good results (at least for certain wood types), to connect wet high density (tropical) hardwood parts. However, it is believed that glue lines with a thickness larger than 0.5 mm (for example in the range of 0.5-1.6 mm) can also provide good results.

It is to be understood that in the present application, the term "comprising" does not exclude other elements or steps. Also, each of the terms "a" and "an" does not exclude a plurality. Any reference sign(s) in the claims shall not be construed as limiting the scope of the claims.

The term "part" should be interpreted broadly, since it can mean an element, building element, construction component and/or another part to be joined.

For example, the method can include connecting two parts to form a composite element CE, or more than two parts. In case the element CE, to be manufactured, contains more than two parts, for example, the method can include joining the parts when they are all moist, wherein spaced-apart bonding surfaces are provided between all the parts, to be connected using a respective glue layer. Besides, a method for joining a plurality of parts can involve a sequence of gluing two parts to provide a composite element, and subsequently gluing a further part to the resulting composite element, until a desired number of parts has been joined together.

## Claims

1. A method for joining moist parts, for example moist wood parts, wherein spaced-apart bonding surfaces of the parts are connected using a glue.

2. The method according to claim 1, wherein the bonding surfaces are solid, uninterrupted glue receiving surfaces of the parts, that are faced towards each other, wherein the glue substantially contacts both bonding surfaces.

3. The method according to claim 1 or 2, wherein the glue wets at least 50% of each of the bonding surfaces, preferably at least 75% and more preferably eat least 90%.

4. The method according to any of the preceding claims, including: positioning one or more spacers (8) between the bonding surfaces (1a, 2a) of the parts (1, 2) to define or uphold a glue receiving space between the surfaces.

5. The method according to claim 4, wherein a plurality of spacers (8) are mixed with the glue before the glue is applied to the parts (1, 2).

6. The method according to claim 4 or 5, wherein the spacers (8) are configured to hold opposite bonding surfaces (1a, 2a) in parallel, and at a constant distance from each other during curing of the glue.

7. The method according to any of the preceding claims, comprising providing a glue layer (3) having a thickness (T) larger than 0.1 mm, preferably larger than 0.2 mm, for example in the range of 0.2-2 mm, between the bonding surfaces, wherein the glue layer thickness is preferably in the range of 0.3-0.7 mm, more preferably in the range of 0.4-0.6 mm, wherein most preferably said glue layer thickness (T) is constant.

8. The method according to any of claims 4-6 in combination with claim 7, wherein the one or more spacers (8) is/are made of rigid material and has a thickness that equals a desired glue layer thickness (T).

9. The method according to any of the preceding claims, including pressing the moist parts (1, 2) together, particularly in directions normal with respect to an intermediate glue layer, during a curing of the glue (3), preferably using a pressure larger than about 0.5 N/mm².

10. The method according to claim 9 in combination with any of claims 4-6, 8, wherein the one or more spacers (8) is/are configured to prevent that the pressing together of the parts (1, 2) leads to tension in the glue.

11. The method according to any of the preceding claims, wherein the moist parts (1, 2) are thermally treated to cure the glue, by submerging the parts (1,2) in hot fluid, preferably hot water (W).

12. The method according to claim 11, wherein the parts (1, 2) are cooled after the thermal treatment, using a cooling liquid, for example water.

13. The method according to any of the preceding claims, wherein at least one of the moist parts (1, 2) measures at least 1 cm along a first orthogonal direction (X), at least 1 cm along a second orthogonal direction (Y), and at least 1 mm along a third orthogonal direction (Z).

14. The method according to any of the preceding claims, wherein the glue is applied onto the moist parts (1, 2), such that the glue does not penetrate the parts (1, 2)

15. The method according to any of the preceding claims, wherein the glue is or contains a curable epoxy resin.

16. The method according to any of the preceding claims, wherein the glue is or contains a curable polyurethane adhesive, or is one of: a phenol formaldehyde type, a resorcinol formaldehyde, and a phenolresorcinol formaldehyde type glue.

17. The method according to any of the preceding claims, wherein at least one of the moist parts (1, 2) is made of: concrete, stone, brick, or ceramics.

18. The method according to any of the preceding claims, comprising: wetting the parts (1, 2) with water before application of the glue (3) to the parts (1, 2).

19. The method according to any of the preceding claims, wherein at least one of the moist parts is made of freshly cut wood.

20. The method according to any of the preceding claims, including laminating or finger jointing the parts (1, 2) together.

21. The method according to any of the preceding claims, wherein at least one of the moist parts is a wood part, wherein the wood fibers of the wood part (1, 2) are substantially saturated with water, before the parts are connected to each other using the glue.

22. The method according to any of the preceding claims, wherein at least one of the moist parts (1, 2) is made of wood, particularly hardwood, for example at least one of: oak, beech, elm, maple, tropical hardwood, meranti, wenge, walnut, teak, mahogany, azobe, maçaranduba, and ebony, and/or has a dry wood density of at least 800 kg/m³.

23. The method according to any of the preceding claims, wherein the moist parts (1, 2) are made of the same material.

24. A method for joining moist hardwood parts, for example a method according to any of the preceding claims, wherein bonding surfaces of the hardwood parts are connected using a glue.

25. The method according to claim 24, wherein a glue line having a thickness of more than 0.1 mm is applied between the bonding surfaces, and preferably a glue line having a thickness in the range of 0.2 mm - 2 mm

26. A composite element (CE), manufactured by a method according to any of the preceding claims.
